# EUROPÄISCHE PATENTANMELDUNG

(11) **EP 1 479 964 A2**
(43) Veröffentlichungstag der Anmeldung: **24.11.2004**
(21) Anmeldenummer: 04405307.2
(22) Anmeldetag: 13.05.2004
(51) Int. Cl.: F16P 3/00

(54) **Sicherheits-Fernsteuerung**

(30) Priorität: 22.05.2003 CH 9142003
(71) Anmelder: Safecom Engineering Ag, CH-6022 Grosswangen (CH)
(72) Erfinder: Ineichen, Alois, 6017 Ruswil (CH)
(74) Vertreter: Frei Patent Attorneys

(57) **Zusammenfassung**

In einem System zur Sicherheits-Fernsteuerung einer Maschine, insbesondere eines Roboters oder Manipulators (4), werden Steuersignale zur Steuerung der Maschine (4) von einem mobilen Bediengerät (1) über ein Funktelegramm (5) an eine Basisstation (2) übertragen. Es wird eine räumlichen Position des Bediengerätes (1) bestimmt. Nach Massgabe der räumlichen Position wird ein Steuersignal unterdrückt.

Damit ist es möglich, Steuerbefehle zu unterdrücken, respektive ihre Ausführung zu verhindern, wenn sich das Bediengerät (1) respektive die Bedienperson in einem räumlichen Bereich (9) befinden, von dem aus die drahtlose Steuerung zwar funktionieren würde, aber eine Überwachung der Maschine (4) durch die Bedienperson gar nicht möglich ist.

## Beschreibung

Die Erfindung bezieht sich auf das Gebiet der Sicherheitssysteme zur Steuerung von Maschinen. Sie bezieht sich auf ein System zur Sicherheits-Fernsteuerung, eine Fernbedienung, eine Basisstation und ein Verfahren zur Sicherheits-Fernsteuerung gemäss dem Oberbegriff des jeweiligen unabhängigen Patentanspruchs.

### STAND DER TECHNIK

Eine derartige Sicherheits-Fernsteuerung ist beispielsweise aus WO 02078913 A1 bekannt. Eine Fernsteuerung zur Steuerung und Programmierung eines Manipulators respektive Roboters ist zur drahtlosen Kommunikation mit einer Steuereinheit des Manipulators eingerichtet. Die Fernsteuerung dient unter anderem zum Einlernen ("teaching") von Manipulatorpositionen und Bewegungsabläufen. Dazu steht typischerweise ein Programmierer in der Nähe des Arbeitsbereiches des Manipulators, steuert eine Bewegung des Manipulators mittels beispielsweise eines Steuerhebels der Fernsteuerung, und überwacht und korrigiert die Bewegung visuell. Die Fernsteuerung weist einen Not-Aus-Schalter auf, mit welcher der Manipulator in einer Gefahrensituation oder bei einer unkontrollierbaren Bewegung gestoppt werden kann.

### DARSTELLUNG DER ERFINDUNG

Eine Aufgabe der Erfindung ist, ein System zur Sicherheits-Fernsteuerung, eine Fernbedienung, eine Basisstation und ein Verfahren zur Sicherheits-Fernsteuerung der eingangs genannten Art zu schaffen, welche die Sicherheit einer Fernsteuerung gegenüber dem Stand der Technik erhöhen.

Diese Aufgabe lösen ein System zur Sicherheits-Fernsteuerung, eine Fernbedienung, eine Basisstation und ein Verfahren zur Sicherheits-Fernsteuerung mit den Merkmalen der entsprechenden unabhängigen Patentansprüche.

Das System zur Sicherheits-Fernsteuerung weist also ein mobiles Bediengerät zur Eingabe und zum Senden von Steuerbefehlen über eine drahtlose Kommunikationsverbindung, und eine Basisstation zum Empfang von gesendeten Steuerbefehlen und zur Ansteuerung einer Maschine auf. Das System weist Mittel zur Bestimmung einer räumlichen Position des Bediengerätes auf, und Mittel zur Unterdrückung eines Steuerbefehles nach Massgabe dieser räumlichen Position.

Damit ist es möglich, Steuerbefehle zu unterdrücken, respektive ihre Ausführung zu verhindern, wenn sich das Bediengerät respektive die Bedienperson in einem räumlichen Bereich befinden, von dem aus die drahtlose Steuerung zwar funktionieren würde, aber eine Überwachung der Maschine durch die Bedienperson gar nicht möglich ist. Beispielsweise könnte sich sonst die Bedienperson mit dem Bediengerät in einen anderen Raum begeben, oder derart weit von der Maschine, beispielsweise einem Schweissroboter, entfernen, dass keine zuverlässige Kontrolle der Bewegungen der Maschine mehr möglich ist.

Die räumliche Position kann eine absolute Position respektive Lage oder eine Relativposition bezüglich der Maschine oder der Basisstation sein. Die Relativposition kann in zweidimensionalen Koordinaten oder durch lediglich eine Distanz ausgedrückt sein.

Die Maschine ist vorzugsweise stationär und unterliegt bestimmten Sicherheitsanforderungen für insbesondere den Personenschutz. Vorzugsweise ist die Maschine ein Manipulator oder Industrieroboter, wie sie zur Montage, zum Schweissen, Farbspritzen, Entgraten, Bearbeiten etc. verwendet werden.

Das Bediengerät ist vorzugsweise ein Gerät zur Programmierung ("teaching") und zum Verifizieren von Positionen und Bewegungsabläufen eines Manipulators. Es weist vorzugsweise Mittel zur Positionssteuerung, beispielsweise einen Steuerknüppel ("Joystick"), und/oder einen Zustimmschalter und/oder einen Notstopp-Schalter auf. Ein Zustimmschalter erlaubt einerseits ein schrittweises Abfahren einer Trajektorie durch den Manipulator. Andererseits wird bei Nichtbetätigung oder bei zu fester Betätigung des Zustimmschalters ein Notstopp des Manipulators ausgelöst. In einer weiteren Ausführungsform der Erfindung weist das Bediengerät als Bedienelement lediglich einen Notstopp-Schalter auf.

Als Steuerbefehle sind also nicht nur reine Bewegungsbefehle. sondern auch beispielsweise Zustimmbefehle und Not-Aus-Signale zu verstehen. Steuerbefehle werden im Bediengerät erfasst und entsprechend codiert und/oder moduliert über die drahtlose Kommunikationsverbindung gesendet. Die Basisstation weist Mittel zum drahtlosen Empfang der modulierten Signale auf. Sie empfängt, demoduliert und/oder decodiert die Befehle und übermittelt sie an eine Steuerung respektive an ein Kontrollgerät der Maschine.

In einer weiteren Ausführungsform der Erfindung existieren unterschiedliche räumliche Bereiche für unterschiedliche Kategorien von Steuerbefehlen. Beispielsweise werden Zustimmbefehle und/oder Bewegungsbefehle nur in einem ersten Bereich in der Nähe des Manipulators akzeptiert, und werden Not-Aus-Befehle in einem grösseren, aber auch begrenzten Bereich akzeptiert.

In einer bevorzugten Ausführungsform der Erfindung ist das Bediengerät zur gleichzeitigen oder koordinierten Steuerung von zwei zusammenwirkenden Manipulatoren konfiguriert.

In einer bevorzugten Ausführungsform der Erfindung ist das Mittel zur Bestimmung der räumlichen Position des Bediengerätes zur Bestimmung einer räumlichen Distanz zwischen dem Bediengerät und der Basisstation oder der Maschine konfiguriert. Steuerbefehle werden also unterdrückt, falls diese Distanz einen vorgegebenen Wert überschreitet. Ansonsten werden die Steuerbefehle akzeptiert. Die Distanzmessung geschieht vorzugsweise durch Kombination einer drahtlosen und einer Ultraschall-Signalübermittlung. Dabei wird ein Ultraschallsignal beispielsweise von der Basisstation ausgesendet und durch das Bediengerät empfangen. Der Zeitpunkt des Aussendens wird über Funk vom Bediengerät aus an die Basisstation übermittelt oder umgekehrt von der Basisstation aus an das Bediengerät übermittelt. Das Ultraschallsignal ist moduliert, so dass eine Unterscheidung von Störgeräuschen möglich ist. Aus einer Laufzeitmessung wird die Distanz bestimmt. In einer bevorzugten Variante der Erfindung wird die Distanzmessung durch Übertragung eines Funksignals vom Bediengerät an die Basisstation ausgelöst. Die Basisstation sendet also das Ultraschallsignal unmittelbar nach Empfangen des Funksignals. Aufgrund der vernachlässigbaren Laufzeit des Funksignals kann das Bediengerät aus der Zeit zwischen dem Senden des Funksignals und dem Empfangen des Ultraschallsignals die Distanz bestimmen.

Vorzugsweise wird als auslösendes Funksignal eine ohnehin vorgenommene Steuerbefehlsübertragung verwendet. Es wird also die Distanzmessung jeweils nach einer Befehlsübermittlung vorgenommen. Üblicherweise werden im Betrieb des Systems Steuerbefehle mit kleinen Zeitabständen, d.h. von wenigen Sekunden übermittelt. Dadurch wird die Distanzmessung nur bei Bedarf durchgeführt, also im Zusammenhang mit einer Befehlsübermittlung. Auch muss dabei kein zusätzliches Signal zum Auslösen des Ultraschallsignals gesendet werden. Durch diese beiden Massnahmen wird der Energieverbrauch im Bediengerät gesenkt.

Ist die gemessene Distanz grösser als eine vorgegebene Schwelle, so wird ein Alarm ausgelöst und werden Steuerbefehle durch das Bediengerät oder in der Basisstation unterdrückt. Falls die Steuerbefehle im Bediengerät unterdrückt werden, so wird statt dessen nur ein Befehl zur Auslösung der Distanzmessung übermittelt. Falls überhaupt kein Ultraschallsignal empfangen wird, wird ebenfalls der Alarm ausgelöst. Sobald wieder eine zulässige Distanz gemessen wird, werden nachfolgende Steuerbefehle akzeptiert respektive weitergeleitet.

In der Variante der Erfindung, in welcher mehrere Kategorien von Steuerbefehlen unterschieden und selektiv unterdrückt werden, werden sinngemäss auch mehrere Distanzbereiche unterschieden.

Grundsätzlich sind auch andere Distanzmessverfahren einsetzbar, und können Steuerbefehle entsprechend einer gemessenen Distanz im Bediengerät oder erst in der Basisstation unterdrückt werden.

Anstelle einer Distanzmessung kann auch eine zweidimensional absolute oder relative Position des Bediengerätes bestimmt werden. Dazu ist ein vorgegebener räumlicher Bereich beliebiger Form um die Maschine definiert, beispielsweise in Form eines die Maschine umfassenden Raumes, oder eines Bereiches, von dem aus die Maschine sichtbar ist. Nur solange sich das Bediengerät innerhalb dieses Bereiches befindet, werden Steuerbefehle akzeptiert. Die Position kann beispielsweise mittels eines optischen, akustischen oder auf Funk basierendem Triangulationsverfahrens oder mittels differentiellem GPS (global positioning system), eventuell unter Verwendung von Referenzsendern, bestimmt werden.

In einer bevorzugten Ausführungsform der Erfindung wird das Ultraschallsignal mulidirektional oder möglichst omnidirektional abgestrahlt. Dabei wird vorzugsweise ein ebener Raumbereich in der Umgebung des Ultraschallsenders, in dem eine Bedienperson sich aufhalten kann, bestrahlt. Um dies mit einem einzigen Ultraschallwandler, typischerweise einem Piezoelement, zu erreichen, wird ein Mittel zur Signalverteilung bezüglich des Piezoelements angeordnet. Das Mittel zur Signalverteilung ist vorzugsweise ein kegelförmiger Körper mit leicht nach aussen gewölbter Kegelfläche, im folgenden Reflektor genannt. Diese Wölbung oder Bombierung entspricht in einem Querschnitt des Reflektors durch die Kegelachse einer Wölbung der Schnittlinien mit der Kegelfläche nach aussen. Das Piezoelement wird auf einem erhöhten Träger in der Nähe des Manipulators oder der Basisstation derart angeordnet, dass seine Abstrahlrichtung im Wesentlichen senkrecht nach oben zeigt. Über dem Piezoelement ist der Reflektor mit der Kegelspitze nach unten, also der Abstrahlrichtung entgegen angeordnet. Dazu wird der Reflektor durch einen oder mehrere dünne Tragelemente gehalten. Die Anordnung des Reflektors bewirkt eine Umlenkung der senkrecht abgestrahlten Ultraschallwellen und eine Verteilung über 360 Grad in horizontaler Richtung. Die Wölbung der Kegelfläche bewirkt eine Divergenz respektive Verteilung der ansonsten stark gerichteten Wellen auch in vertikaler Richtung. Das Piezoelement und der Reflektor können auch an einem Träger angebracht sein, der beispielsweise an einer Decke eines Raumes befestigt ist. Dann strahlt das Piezoelement nach unten ab, und die Kegelspitze ist nach oben gerichtet.

Ein Bediengerät zur Sicherheits-Femsteuerung weist Mittel zum Empfangen von Ultraschallsignalen, Mittel zum Bestimmen einer Zeitdauer zwischen dem Senden eines Steuerbefehls und dem Empfang eines korrespondierenden Ultraschallsignals, Mittel zur Bestimmung einer Distanz aus dieser Zeitdauer, Mittel zur Vergleich der Distanz mit mindestens einem vorgegebenen Schwellwert und Mittel zur Unterdrückung oder Markierung eines Steuerbefehls nach Massgabe dieses Vergleiches auf. Die Bestimmung der Distanz und der Schwellwertvergleich können auch zusammengefasst werden, indem die gemessene Laufzeit respektive Zeitdauer mit einer vorgegebenen Zeit verglichen wird, die der Schwellwertdistanz entspricht. Die Mittel zur Bestimmung und zum Vergleich der Distanz entsprechen in diesem Fall einem Mittel zum Vergleich der Zeitdauer.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: eine schematische Darstellung eines erfindungsgemässen Systems;
- Figur 2: schematisch verschiedene Bereiche um einen Manipulator;
- Figur 3: ein Blockdiagramm einer Basisstation, und
- Figur 4: ein Blockdiagramm eines Bediengerätes.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

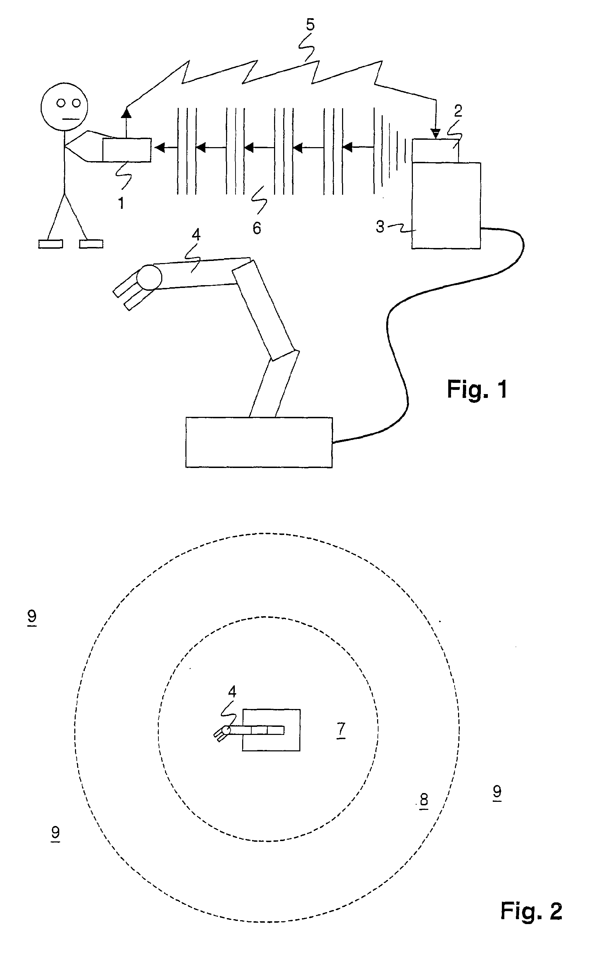

Die Figur 1 zeigt eine schematische Darstellung eines erfindungsgemässen Systems. Ein Bediengerät 1 ist zum Senden von Funktelegrammen 5 über eine drahtlose Kommunikationsverbindung an eine Basisstation 2 eingerichtet. Die Basisstation 2 weist einen Sender zum Ausstrahlen von Ultraschallsignalen 6 über den vorgesehenen Arbeitsbereich des Bediengerätes 1 auf. Die Basisstation 2 ist über eine Kommunikationsschnittstelle zur Übergabe von Steuerbefehlen mit einem Kontrollgerät 3 einer Maschine, beispielsweise eines Manipulator 4 verbunden.

Figur 2 zeigt schematisch verschiedene Bereiche um einen Manipulator. Ein erster Nahbereich 7 ist beispielsweise durch eine erste Distanz zwischen Bediengerät 1 und Basisstation 2 respektive Manipulator 4 definiert. Ein zweiter Nahbereich 8 ist durch eine zweite Distanz definiert. Ein ausserhalb dieser Bereiche 7,8 liegender Bereich 9 wird Fernbereich genannt.

Das Verfahren zur Sicherheits-Fernsteuerung wird während eines Betriebes des Bediengerätes 1 wiederholt ausgeführt. In regelmässigen Zeitabständen, oder jeweils bei der Übertragung eines Steuerbefehls von dem Bediengerät 1 an die Basisstation 2 wird eine Bestimmung der räumlichen Lage des Bediengerätes 1 bezüglich der Basisstation 2 durchgeführt. Vorzugsweise geschieht dies durch eine Messung der Distanz zwischen dem Bediengerät 1 und der Basisstation 2 respektive dem Manipulator 4. Dabei wird jeweils unmittelbar nach dem Senden eines Steuerbefehls als Funktelegramm 5 durch die Basisstation 2 ein Ultraschallsignal 6 erzeugt und durch ein Piezoelement 32 in der Nähe des Manipulators 4 abgestrahlt. Beim Empfang des Ultraschallsignals 6 bestimmt das Bediengerät 1 durch Laufzeitmessung die Distanz. Je nachdem, in welchem Bereich 7,8,9 sich das Bediengerät 1 befindet, werden bestimmte oder alle Steuersignale unterdrückt. Diese Unterdrückung geschieht beispielsweise im Bediengerät 1 selber, indem das Steuersignal nicht weitergeleitet wird. Alternativ wird eine Gültigkeitsmarkierung ("Flag") im Funktelegramm 5 zur Übermittlung des Steuerbefehls auf "ungültig" gesetzt und der Befehl dann in der Basisstation 2 ignoriert.

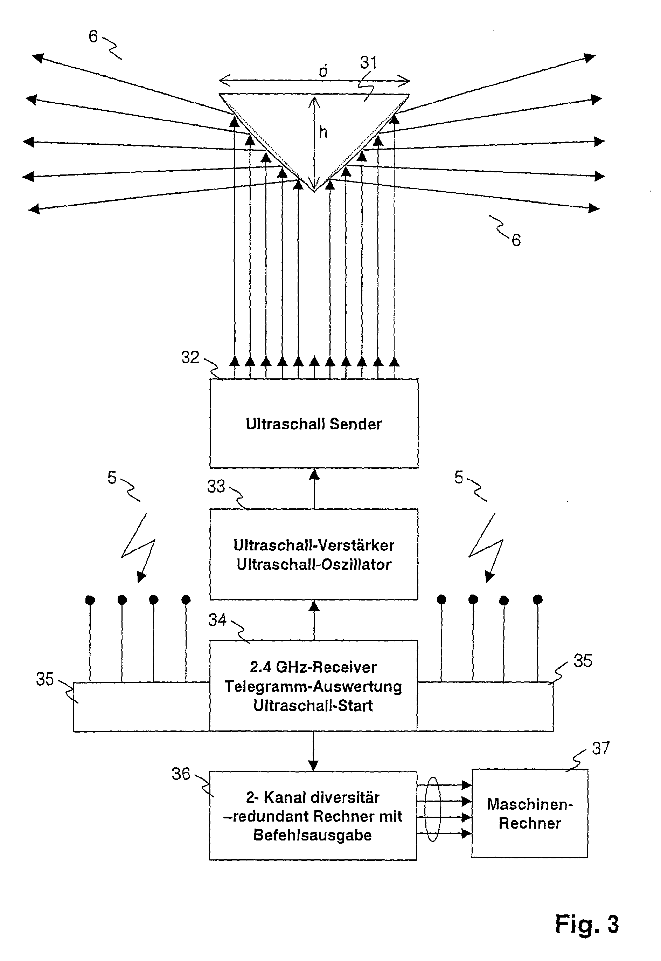

Figur 3 zeigt ein Blockdiagramm einer Basisstation 2. Ein als Ultraschall-Sender wirkendes Piezo-Element 32 wird durch einen Ultraschall-Treiber 33 angesteuert.

Der Ultraschall-Treiber 33 wird durch eine Funkeinheit 34 getriggert, welche ferner die Funktelegramme 5 über Antennen 35 empfängt. Empfangene Funktelegramme 5, werden decodiert und die entsprechenden Steuerbefehle in einer Einheit zur Befehlsverarbeitung 36 ausgewertet und über eine Steuerschnittstelle an eine Maschinensteuerung 37 übermittelt. Die Maschinensteuerung 37 selber ist nicht Teil des Systems zur Sicherheits-Fernsteuerung.

Die vom Piezoelement 32 abgestrahlten Ultraschallwellen werden durch einen Reflektor 31 im Raum verteilt. Der Reflektor 31 weist eine im wesentlichen kegelförmige Oberfläche auf, deren Spitze dem Piezo-Element 32 zugewandt ist. Die Kegelform bewirkt eine Ablenkung der Abstrahlung in alle Richtungen senkrecht zur Abstrahlhauptrichtung des Piezo-Elements 32. Eine Wölbung der Kegelfläche nach aussen bewirkt eine Verteilung der Abstrahlung in vertikaler Richtung. Ein Durchmesser d der Basis des Kegels liegt beispielsweise im Bereich von 10 bis 40 Millimetern, vorzugsweise im Bereich von 20 bis 30 Millimetern. Eine Höhe h des Kegels ist im wesentlichen gleich der Hälfte des Durchmessers d.

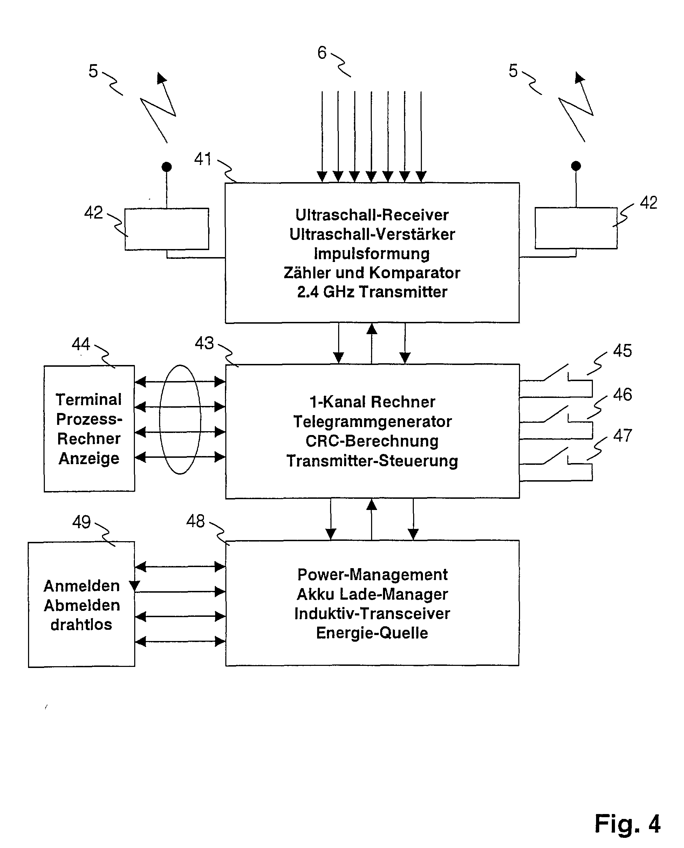

Figur 4 zeigt ein Blockdiagramm eines Bediengeräts 1. Eine Sende/Empfangseinheit 41 dient zum Senden der Funktelegramme 5 über Antennen 42 und zum Empfangen und Verstärken des Ultraschallsignals 6. Die Antenne 42 sind vorzugsweise Patch-Antennen. Als Frequenzband zur Übertragung der Funktelegramme 5 wird vorzugsweise ein Bereich um 2.4 GHz im ISM-Band (Industrial, Scientific and Medical) verwendet. Die Sende/Empfangseinheit 41 kommuniziert bidirektional mit einer Datenverarbeitungseinheit 43 zur Erzeugung und Codierung von Funktelegrammen 5, vorzugsweise unter Verwendung von CRC (Cyclic Redundancy Code)-Verfahren. Die Datenverarbeitungseinheit 43 steuert eine Benutzerschnittstelle 44 an und bestimmt einen Zustand von einem Zustimmschalter 45, einem Not-Aus-Schalter 46 und einem Neigungsschalter 47. Die Datenverarbeitungseinheit 43 ist ferner mit einer Energiemanagementeinheit 48 und diese mit einer An- und Abmeldeeinheit 49 verbunden.

### BEZUGSZEICHENLISTE

- 1: Bediengerät
- 2: Basisstation
- 3: Maschinensteuerung, Kontrollgerät
- 4: Maschine, Manipulator
- 5: Funktelegramm
- 6: Ultraschallsignal
- 7: erster Nahbereich
- 8: zweiter Nahbereich
- 9: Fernbereich
- 31: Reflektor
- 32: Piezo-Element
- 33: Ultraschall-Treiber
- 34: Funkeinheit
- 35: Antenne
- 36: Befehlsverarbeitung
- 37: Maschinensteuerung
- 41: Sende/Empfangseinheit
- 42: Antenne
- 43: Datenverarbeitungseinheit
- 44: Benutzerschnittstelle
- 45: Zustimmschalter
- 46: Not-Aus-Schalter
- 47: Neigungsschalter
- 48: Energiemanagementeinheit
- 49: An- und Abmeldeeinheit

## Patentansprüche

1. System zur Sicherheits-Fernsteuerung, aufweisend ein mobiles Bediengerät (1) zur Eingabe von Steuerbefehlen und zum Senden von Steuerbefehlen über eine drahtlose Kommunikationsverbindung, und eine Basisstation (2) zum Empfang von gesendeten Steuerbefehlen und zur Ansteuerung einer Maschine (4), **dadurch gekennzeichnet,**
**dass** das System Mittel zur Bestimmung einer räumlichen Position des Bediengerätes (1), und
Mittel zur Unterdrückung eines Steuerbefehles nach Massgabe dieser räumlichen Position aufweist.

2. System gemäss Anspruch 1, wobei das Mittel zur Unterdrückung eines Steuerbefehles konfiguriert ist zum Akzeptieren eines Steuerbefehls, falls sich das Bediengerät in einem ersten räumlichen Bereich befindet, und zur Unterdrückung eines Steuerbefehls, falls sich das Bediengerät in einem zweiten räumlichen Bereich befindet.

3. System gemäss Anspruch 2, wobei der erste räumliche Bereich ein Nahbereich der Maschine ist, welcher die Maschine enthält.

4. System gemäss Anspruch 2 oder 3, wobei das Mittel zur Bestimmung einer räumlichen Position des Bediengerätes (1) konfiguriert ist zur Bestimmung einer Distanz zwischen dem Bediengerät (1) und der Basisstation (2) oder zwischen dem Bediengerät (1) und der Maschine (4).

5. System gemäss Anspruch 4, wobei die Basisstation (2) konfiguriert ist zum Auslösen des Abstrahlens eines Ultraschallsignals (6) nach Empfangen eines über die drahtlose Kommunikationsverbindung (5) empfangenen Steuerbefehls, und das Bediengerät (1) konfiguriert ist zum Messen einer Zeit zwischen dem Senden des Steuerbefehls und dem Empfangen des Ultraschallsignals (6), zur Bestimmung einer Schallaufzeit und einer Distanz zwischen dem Bediengerät (1) und der Basisstation (2), und zur Unterdrückung von Steuerbefehlen nach Massgabe dieser Distanz.

6. System gemäss einem der vorhergehenden Ansprüche, wobei mindestens zwei Kategorien von Steuerbefehlen vorliegen, und das System Mittel zur Unterdrückung von Steuerbefehlen einer ersten Kategorie nach Massgabe eines ersten Kriteriums an die räumliche Position des Bediengerätes und zur Unterdrückung von Steuerbefehlen einer zweiten Kategorie nach Massgabe eines zweiten Kriteriums an die räumliche Position des Bediengerätes aufweist.

7. System gemäss Anspruch 1 oder 2 oder 3, wobei das Mittel zur Bestimmung der räumlichen Position des Bediengerätes konfiguriert ist zu Bestimmung einer Relativposition des Bediengerätes bezüglich der Maschine in mindestens zwei Dimensionen.

8. Bediengerät (1) zur Sicherheits-Fernsteuerung einer Maschine (4), welches mobil ist und aufweist Mittel (42) zum Senden von Steuerbefehlen über eine drahtlose Kommunikationsverbindung (5), **dadurch gekennzeichnet,**
**dass** das Bediengerät (1) aufweist Mittel (41) zum Empfangen von Ultraschallsignalen (6), Mittel (43) zum Bestimmen einer Zeitdauer zwischen dem Senden eines Steuerbefehls (5) und dem Empfang eines korrespondierenden Ultraschallsignals (6), Mittel zur Bestimmung einer Distanz aus dieser Zeitdauer, Mittel zur Vergleich der Distanz mit mindestens einem vorgegebenen Schwellwert und Mittel zur Unterdrückung oder Markierung eines Steuerbefehls nach Massgabe dieses Vergleiches.

9. Basisstation (2) zur Sicherheits-Fernsteuerung einer Maschine (4), aufweisend Mittel (35) zum Empfang von Steuerbefehlen über eine drahtlose Kommunikationsverbindung (5), **dadurch gekennzeichnet,**
**dass** die Basisstation (2) aufweist Mittel (34) zu Auswertung und Weiterleitung der Steuerbefehle und Mittel (31,32,33) zum Auslösen des Sendens eines Ultraschallsignals (6) aufgrund eines empfangenen Steuerbefehls.

10. Basisstation (2) gemäss Anspruch 9, wobei die Basisstation (2) einen Reflektor (31) zur Abstrahlung von Ultraschallwellen aufweist, wobei dieser Reflektor (31) eine im wesentlichen kegelförmige Oberfläche aufweist, und mit der Kegelspitze einem Piezoelement (32) zu Abstrahlung von Ultraschallwellen zugewandt ist.

11. Verfahren zur Sicherheits-Fernsteuerung einer Maschine (4), wobei Steuersignale zur Steuerung der Maschine von einem mobilen Bediengerät (1) über ein Funktelegramm (5) an eine Basisstation (2) übertragen werden, **dadurch gekennzeichnet, dass** das Verfahren die folgenden Schritte aufweist:
• Bestimmen einer räumlichen Position des Bediengerätes (1); und
• Unterdrückung eines Steuersignals nach Massgabe der räumlichen Position.

12. Verfahren gemäss Anspruch 11, wobei das Verfahren die folgenden Schritte aufweist
• Empfangen des Funktelegramms (5) mit einem Steuersignal durch die Basisstation (2);
• Auslösen des Sendens eines Ultraschallsignals (6) durch den Empfang des Funktelegramms (5);
• Senden des Ultraschallsignals (6) durch die Basisstation (2);
• Empfang des Ultraschallsignals (6) durch das Bediengerät (1);
• Bestimmung einer Zeitdauer zwischen dem Senden des Funktelegramms (5) und dem Empfang des Ultraschallsignals (6); und
• Unterdrücken oder Markieren eines nachfolgenden Steuersignals nach Massgabe der Zeitdauer.
